(19) Europäisches Patentamt
European Patent Office
Office européen des brevets

(11) **EP 2 618 316 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(51) Int Cl.:
*G07C 15/00* (2006.01)    *A63F 5/04* (2006.01)
*G06F 3/01* (2006.01)

(21) Anmeldenummer: **12450004.2**

(22) Anmeldetag: **23.01.2012**

(54) **Glücksrad mit Gestensteuerung**

Wheel of fortune with gesture control

Roue de la fortune avec commande gestuelle

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.07.2013 Patentblatt 2013/30**

(73) Patentinhaber: **Novomatic AG**
**2352 Gumpoldskirchen (AT)**

(72) Erfinder:
• **Kaiblinger, Harald**
**2352 Gumpoldskirchen (AT)**

• **Schrötter, Florian**
**2514 Traiskirchen (AT)**

(74) Vertreter: **Wildhack & Jellinek**
**Patentanwälte**
**Landstraßer Hauptstraße 50**
**1030 Wien (AT)**

(56) Entgegenhaltungen:
DE-U1- 29 516 806    US-A1- 2009 027 337
US-A1- 2009 315 740    US-A1- 2011 289 456

• CAT DADDY GAMES: "Carnival in Aktion", 20110408, 8. April 2011 (2011-04-08), Seiten 1-2, XP007920645,

**Beschreibung**

Die Erfindung betrifft ein Verfahren zum Betrieb eines Glücksrads gemäß dem Oberbegriff des Patentanspruchs 1 sowie ein Glücksrad gemäß dem Oberbegriff des Patentanspruchs 8.

Im Folgenden wird unter einer laufenden Ermittlung, Bestimmung, usw. eine in vorgegebenen, regelmäßigen oder unregelmäßigen zeitlichen Abständen erfolgte Ermittlung, Bestimmung usw. einer Größe verstanden. Wird eine Größe, beispielsweise die Position der Hand, der Drehwinkel, die Drehgeschwindigkeit usw. laufend ermittelt, so wird diese Größe entweder in regelmäßigen Zeitabständen, beispielsweise 10 mal pro Sekunde oder in vorgegebenen unregelmäßigen Zeitabständen ermittelt. So kann unter laufender Bestimmung einer Größe auch die adaptive Anpassung der Ermittlung oder Bestimmung der Größe, zu verstehen sein. Unter laufender Ermittlung kann auch zu verstehen sein, dass das jeweilige Zeitintervall zwischen zwei Messungen bei starken, einen Schwellenwert übersteigenden zeitlichen Veränderungen der zu bestimmenden Größe entsprechend verringert wird.

Unter einem Glücksrad wird eine Vorrichtung verstanden, die von einem Benutzer durch Einleitung einer Drehbewegung in Gang gesetzt wird und anschließend bei einer bestimmten Reibung frei um eine Achse rotiert. Durch diese Reibung und gegebenenfalls zusätzliche Bremsmittel wird das Glücksrad verlangsamt. Auf dem Umfang des Glücksrads sind unterschiedliche Symbole vorgesehen, die für das weitere Spiel eine bestimmte Bedeutung haben, etwa der Gewinne einer bestimmten Summe Geldes, die Ausführung eines weiteren Bonusspiels, den Verlust des Spiels, bestimmte Vorteile im nachfolgenden Spiel usw.. Durch die Drehung des Glücksrads durch den Benutzer wird die Drehstellung des Rades geändert, wobei der Benutzer die konkrete Endposition des Glücksrads nicht genau bestimmen kann, es entsteht somit eine gewisse Zufälligkeit des Ergebnisses. Je nachdem, an welcher Position das Glücksrad stehen bleibt, werden unterschiedliche Symbole mit Hilfe eines Indikators ermittelt, die das weitere Spiel, wie voranstehend genannt, beeinflussen. Ein Glücksrad kann betrieben werden, indem ein tatsächliches (mechanisches) Rad um eine Achse rotierbar gelagert ist und das Rad einen jeweiligen Aufdruck bestimmter Symbole aufweist.

Ein Glücksrad kann allerdings auch virtuell betrieben werden, d. h. das Rad und dessen Bewegung sowie der Aufdruck wird auf einem von einem Computer angesteuerten Monitor dargestellt. Probleme bereiten bei virtuellen Glücksrädern insbesondere die Drehung durch den Benutzer, da die Einflussnahme des Benutzers auf die Vorgänge innerhalb des Computers, insbesondere auf die Drehsimulation auf bestimmte Eingabegeräte beschränkt ist. Sofern im Zusammenhang mit dieser Anmeldung von einem Glücksrad die Rede ist, wird hierunter sowohl ein virtuelles als auch mechanisches Glücksrad verstanden.

Aus dem Stand der Technik sind unterschiedliche auf Gesten beruhenden und berührungslos erfolgenden Betätigungsmechanismen bekannt. So zeigt etwa US 2004/166937A1 ein Spielgerät mit Erkennung von Gesten eines Benutzers, wobei der Sensor zur Erfassung der Nutzerinteraktion etwa eine Videokamera sein kann, die die Bewegungen der Hand des Benutzers erfasst und mit einer Vielzahl von in einer Datenbank abgespeicherten Bewegungen vergleicht. Abhängig von einem Vergleich und einer Übereinstimmung der aufgenommenen Geste mit den in der Datenbank abgespeicherten Gesten wird eine der jeweiligen Geste zugeordnete Aktion ausgeführt.

Aus dem Stand der Technik (US 2011/0289456) ist weiters bekannt, dass Tiefenbilder zur Erkennung von Gesten herangezogen werden. Dabei ist es bekannt, ganz allgemein die die Positionen und Geschwindigkeiten von Körperteilen von Menschen in einem kartesischen Koordinatensystem zu bestimmen, aufgrund der Änderungen der Position über die Zeit die Geschwindigkeit zu bestimmen, zudem auch die Beschleunigung und die Kurvenbewegung einzelner Körperteile zu bestimmen, sowie die Pfade einzelner Körperteile im dreidimensionalen Raum zu verfolgen. Dabei ist es auch möglich, die Darstellung der einzelnen Körperteile aus dem kartesischen Koordinatensystem in ein beliebiges anderes, insbesondere in ein sphärisches Koordinatensystem, zu transformieren, um auf diese Weise die Rotation der Körperteile um Gelenke besser nachvollziehen zu können.

Ein wesentlicher Nachteil dieses Verfahrens besteht in der sehr aufwendigen komplizierten Bilddatenanalyse. Ein solches Verfahren ist immer auf ein konkretes einzelnes Gerät und einen konkreten Benutzer beschränkt und nicht geeignet für eine Vielzahl unterschiedlicher Benutzer eingesetzt zu werden.

Aufgabe der Erfindung ist es, eine intuitive und für die meisten Menschen betätigbare Vorrichtung, nämlich ein Glücksrad, sowie ein Verfahren zum Betrieb dieses Glücksrads zu schaffen.

Insbesondere soll die Erkennung einer Vielzahl unterschiedlicher Gesten vermieden werden und ein für alle Benutzer einheitliches Detektionsverfahren geschaffen werden.

Gewerbliche Anwendung findet das Drehen eines (Glücks-)Drehrad beispielsweise als Zusatzspiel in bzw. während eines Hauptspiels bei Spielautomaten. Das Zusatzspiel, das das Drehen des (Glücks-)Drehrads umfasst, kann durch ein vorbestimmtes Ereignis (z.B. scatter Symbole) im Hauptspiel ausgelöst werden.

Erfindungsgemäß ist ein Verfahren zum Betrieb eines Glücksrads durch einen Benutzer vorgesehen,

- dass mittels einer Kamera die Position des Körperschwerpunkts und einer Hand des Benutzers ermittelt werden,
- dass eine Höhenschwelle auf einen vorgegebenen Wert in Relation zum Körperschwerpunkt festgelegt wird und dass bei Überschreiten der Höhenschwelle durch die Position der Hand eine Drehphase gestartet wird, während der die Position der Hand laufend ermittelt wird,

- dass die durch die Bewegung der Hand des Benutzers vollführte Drehung, laufend ermittelt wird und ein Drehwinkel ermittelt wird,
- dass die Winkelgeschwindigkeit, das ist die zeitliche Änderungsrate des ermittelten Winkels, laufend bestimmt wird,
- dass die Drehphase beendet wird und eine, vorzugsweise unmittelbar vor dem Ende der Drehphase, laufend bestimmte Winkelgeschwindigkeit als Ausgangsdrehgeschwindigkeit festgestellt wird und
- dass nach dem Ende der Drehphase eine freie Rotationsphase gestartet wird, wobei die weitere Drehung des Glücksrads mit der Ausgangsdrehgeschwindigkeit als Ausgangsgeschwindigkeit erfolgt und das Glücksrad laufend gebremst wird und bei einer bestimmten Endposition zum Stillstand kommt und diese Endposition zur Verfügung gehalten wird.

Zur Erkennung der Beendigung der Drehphase ist vorgesehen, dass eine weitere Höhenschwelle auf einen vorgegebenen Wert, insbesondere auf einen vorgegebenen Wert unterhalb des Körperschwerpunkts, festgelegt wird, und bei Unterschreiten der weiteren Höhenschwelle durch die Position der Hand die Drehphase beendet wird und die freie Rotationsphase gestartet wird.

Alternativ oder zusätzlich ist zur Erkennung der Beendigung der Drehphase vorgesehen sein, dass die Drehphase beendet und die freie Rotationsphase gestartet wird, wenn der während der Drehphase vom Glücksrad gegenüber der Ausgangsstellung zurückgelegte Winkel einen vorgegebenen Schwellenwert übersteigt und/oder wenn die Winkelgeschwindigkeit einen vorgegebenen Schwellenwert übersteigt.

Vorteilhaft ist dabei, dass mehrere Benutzer pro System, die insbesondere an mehreren nebeneinander angeordneten Spielgeräten stehen, das Glücksrad drehen können und so auf den weiteren Spielverlauf Einfluss nehmen können. Jedem im Aufnahmebereich der Kamera befindlichen Benutzer gestenbasierende Interaktionen mit dem Spielgerät ermöglicht sind.

Ein weiterer Vorteil der Erfindung besteht darin, dass eine natürlich wirkende Interaktion für einen Benutzer ermöglicht wird, wobei ein Glücksrad ohne physische Berührung des Drehrades handhabbar ist.

Eine vorteilhafte Bestimmung des Drehwinkels kann dadurch erreicht werden, dass in zeitlichen Abständen der Drehwinkel als Winkel zwischen einer durch den Körperschwerpunkt und die Position der Hand verlaufende Geraden und einer vorgegebenen, insbesondere senkrecht stehenden, Bezugsgeraden ermittelt wird.

Eine Alternative Bestimmung des Drehwinkels kann dadurch erreicht werden, dass zu Beginn der Drehphase der Drehwinkel auf einen Startwinkel $\alpha start = \alpha\_0$ gesetzt wird und während der Drehphase laufend zu vorgegebenen Zeitpunkten tn die Position (hp_n) der Hand des Benutzers ermittelt wird

$$hp\_n = [hp\_n\_X, \ hp\_n\_Y, \ hp\_n\_Z],$$

und dass zu jedem Zeitpunkt während der Drehphase die folgenden Berechnungen durchgeführt werden,

$$\beta n = atan2(hp\_n\_Y - hp\_n+1\_Y, \ hp\_n+1\_X - hp\_n\_X)$$

$$dn = \sqrt{((hp\_n+1\_X - hp\_n\_X)^2 + (hp\_n+1\_Y - hp\_n\_Y)^2)}$$

$$\Delta\beta n = \beta n - \alpha\_n$$

$$fexp\_n = f(\Delta\beta n)$$

$$\Delta\alpha n = d0 * fexp\_n * fsensitivity$$

$$\alpha n = \alpha n-1 + \Delta\alpha n$$

wobei an der Drehwinkel des Glücksrads zum Zeitpunkt tn ist und wobei vorzugsweise f die Sinusfunktion ist und wobei fsensitivity einen Wert zwischen 0 und 1, insbesondere zwischen 0,1 und 0,4 aufweist.

Hierdurch wird eine Ermittlung des Drehwinkels möglich, wobei eine laufende Ermittlung des Körperschwerpunktes des Benutzers nicht erforderlich ist.

Zur Unterscheidung von rechtshändigen und linkshändigen Drehungen des Glücksrads kann vorgesehen sein, dass die Position der Hand im Zeitpunkt des Überschreitens der Höhenschwelle mit der Position des Schwerpunkts des Benutzers in Bezug auf eine horizontal und normal zur Ebene des Glücksrads verlaufenden Koordinatenrichtung verglichen werden und abhängig von diesem Vergleich eine Drehung des Glücksrads im Urzeigersinn oder gegen den Uhrzeigersinn angenommen wird.

Um eine graphische Nachvollziehbarkeit des Drehens des Glücksrads zu erreichen, kann vorgesehen sein, dass das Glücksrad während der Drehphase und/oder während der freien Rotationsphase bei seinem jeweiligen Drehwinkel auf einem Monitor dargestellt wird und diese Darstellung in vorgegebenen Intervallen aktualisiert wird, sodass eine Drehbewegung des Glücksrads auf dem Monitor wahrgenommen wird.

Eine besonders vorteilhafte Ermittlung der Position des Benutzers kann erreicht werden, indem die Ermittlung der Position des Körperschwerpunkts sowie der Hand des Benutzers mittels einer 3D-Kamera oder einer infrarotbasierten Tiefensensorkamera erfolgt, wobei für eine Anzahl von Pixeln der jeweiligen Kamera jeweils eine Distanzinformation zur Kamera ermittelt wird.

Um Aufnahmeartefakte, die durch die Bewegungen unterschiedlicher Benutzer bewirkt sind, zu vermeiden, kann vorgesehen sein, dass von denjenigen Benutzern, die sich im Aufnahmebereich der Kamera befinden, ausschließlich derjenige Benutzer zur Ermittlung der Drehbewegung des Glücksrads herangezogen wird, die der Kamera am nächsten ist. Weiters betrifft die Erfindung eine Anordnung umfassend eine Anzeigeeinheit mit einem Monitor zur Darstellung eines Glücksrads sowie eine Erfassungseinheit mit einer Kamera zur Aufnahme eines das Glücksrad drehenden Benutzers,

- wobei die Anzeigeeinheit das Glücksrad zu vorgegebenen Zeitpunkten mit einem vorgegebenen Drehungswinkel darstellt,
- wobei die Erfassungseinheit bei Aktivierung die Position der Hand sowie des Körperschwerpunkts eines im Aufnahmebereich der Kamera befindlichen Benutzers ermittelt, weiter umfassend eine an die Erfassungseinheit sowie an die Anzeigeeinheit angeschlossene Steuereinheit,
- wobei die Steuereinheit bei Aktivierung in einen Initialzustand setzbar ist, bei dem die Steuereinheit die Erfassungseinheit zur Ermittlung der Positionen des Körperschwerpunkts sowie zur laufenden Ermittlung der Position der Hand des Benutzers ansteuert,
- wobei die Steuereinheit eine Vergleichseinheit zum Vergleich der ermittelten Position der Hand mit einer vorgegebenen Höhenschwelle vornimmt und bei Überschreitung der Höhenschwelle durch die Position der Hand den Initialzustand beendet und eine Drehphase startet,
- wobei die Steuereinheit während der Drehphase die Position der Hand laufend ermittelt und den durch die Bewegung der Hand des Benutzers vollführten Drehwinkel laufend ermittelt, wobei sie weiters die Winkelgeschwindigkeit, das ist die zeitliche Änderungsrate des ermittelten Winkels, laufend bestimmt,
- wobei die Steuereinheit die Drehphase beendet und die unmittelbar vor dem Ende der Drehphase ermittelte Winkelgeschwindigkeit als Ausgangsdrehgeschwindigkeit, ermittelt und
- wobei die Steuereinheit nach dem Ende der Drehphase eine freie Rotationsphase startet, während der die weitere Drehung des Glücksrads mit der so ermittelten Ausgangsdrehgeschwindigkeit vorgenommen wird und das Glücksrad laufend gebremst wird und bei einer bestimmten Endposition zum Stillstand kommt und die Steuereinheit diese Endposition zur Verfügung hält.

Diese Anordnung ermöglicht eine sehr einfache Feststellung der Drehbewegung des Benutzers und kann für eine Vielzahl unterschiedlicher Benutzer eingesetzt werden. Es besteht eine intuitive und für die meisten Menschen betätigbare Vorrichtung, nämlich ein Glücksrad, das ohne physische Berührung gedreht werden kann.

Zur Beendigung der Drehphase ist vorgesehen, dass eine weitere Höhenschwelle auf einen vorgegebenen Wert, insbesondere auf einen vorgegebenen Wert unterhalb des Körperschwerpunkts, festgelegt ist, und die Steuereinheit bei Unterschreiten der weiteren Höhenschwelle durch die Hand die Drehphase beendet und die freie Rotationsphase startet.

Alternativ oder zusätzlich ist zur Beendigung der Drehphase vorgesehen, dass die Steuereinheit die Drehphase beendet und die freie Rotationsphase startet, wenn der während der Drehphase vom Glücksrad gegenüber der Ausgangsstellung zurückgelegte Drehwinkel einen vorgegebenen Schwellenwert übersteigt und/oder wenn die Winkelgeschwindigkeit einen vorgegebenen Schwellenwert übersteigt.

Eine vorteilhafte Bestimmung des Drehwinkels kann dadurch erreicht werden, dass die Steuereinheit eine Drehwinkelbestimmungseinheit aufweist, die in zeitlichen Abständen den Drehwinkel als Winkel zwischen einer durch den Körperschwerpunkt und die Position der Hand verlaufende Geraden und einer vorgegebenen, insbesondere senkrecht stehenden, Bezugsgeraden ermittelt.

Eine Alternative Bestimmung des Drehwinkels kann dadurch erreicht werden, dass die Steuereinheit eine Drehwinkelbestimmungseinheit aufweist, die

- zu Beginn der Drehphase den Drehwinkel auf einen vorgegebenen Startwinkel $\alpha$start = $\alpha\_0$ setzt
- während der Drehphase laufend zu vorgegebenen Zeitpunkten tn die Position (hp_n) der Hand des Benutzers ermittelt

$$hp\_n = [hp\_n\_X, \ hp\_n\_Y, \ hp\_n\_Z],$$

und

- zu jedem Zeitpunkt tn während der Drehphase die folgenden Berechnungen durchführt:

$$\beta n = atan2(hp\_n\_Y - hp\_n+1\_Y, hp\_n+1\_X - hp\_n\_X)$$

$$dn = \sqrt{((hp\_n+1\_X - hp\_n\_X)^2 + (hp\_n+1\_Y - hp\_n\_Y)^2)}$$

$$\Delta\beta n = \beta n - \alpha\_n$$

$$fexp\_n = f(\Delta\beta n)$$

$$\Delta\alpha n = d0 * fexp\_n * fsensitivity$$

$$\alpha n = \alpha n\text{-}1 + \Delta\alpha n$$

wobei an der Drehwinkel des Glücksrads zum Zeitpunkt ist, und wobei vorzugsweise f die Sinusfunktion ist und wobei fsensitivity einen Wert zwischen 0 und 1, insbesondere zwischen 0,1 und 0,4 aufweist.

Hierdurch wird eine Ermittlung des Drehwinkels möglich, wobei eine laufende Ermittlung des Körperschwerpunktes des Benutzers nicht erforderlich ist.

Zur Unterscheidung von rechtshändigen und linkshändigen Drehungen des Glücksrads kann eine weitere Vergleichseinheit vorgesehen sein, die die Position der Hand im Zeitpunkt des Überschreitens der Höhenschwelle mit der Position des Schwerpunkts des Benutzers in Bezug auf eine normal zur Ebene des Glücksrads und horizontal verlaufenden Koordinatenrichtung vergleicht und abhängig von diesem Vergleich ermittelt, ob eine Drehung des Glücksrads im Urzeigersinn oder gegen den Uhrzeigersinn stattfindet.

Um eine graphische Nachvollziehbarkeit des Drehens des Glücksrads zu erreichen, kann vorgesehen sein, dass die Anzeigeeinheit das Glücksrad während der Drehphase und/oder während der freien Rotationsphase bei seinem jeweiligen Drehwinkel auf dem Monitor darstellt wird und diese Darstellung in vorgegebenen Intervallen aktualisiert, sodass eine Drehbewegung des Glücksrads auf dem Monitor wahrnehmbar ist.

Eine besonders vorteilhafte Ermittlung der Position des Benutzers kann erreicht werden, indem die Kamera eine 3D-Kamera oder eine infrarotbasierte Tiefensensorkamera ist, mit deren Hilfe für eine Anzahl von Pixeln jeweils eine Distanzinformation zur Kamera ermittelbar ist.

Um Aufnahmeartefakte, die durch die Bewegungen unterschiedlicher Benutzer bewirkt sind, zu vermeiden, kann vorgesehen sein, dass eine Auswahleinheit vorgesehen ist, die von denjenigen Benutzern, die sich im Aufnahmebereich der Kamera befinden, ausschließlich denjenigen Benutzer zur Ermittlung der Drehbewegung des Glücksrads auswählt, die der Kamera am nächsten ist.

Zwei bevorzugte Ausführungsbeispiele der Erfindung sowie einige Varianten dieser Ausführungsbeispiele wird anhand der folgenden Zeichnungsfiguren näher dargestellt.

**Fig. 1** zeigt eine Anordnung mit einem Glücksrad sowie vier Automaten.
**Fig. 2** zeigt eine weitere Anordnung in Schrägansicht mit einem Glücksrad und zwei Automaten.
**Fig. 3** zeigt die in **Fig. 2** dargestellte Anordnung in Seitenansicht.
**Fig. 4** zeigt die in **Fig. 2** dargestellte Ausführungsform in Schrägansicht.
**Fig. 5** zeigt die in **Fig. 4** dargestellte Ausführungsform mit einer Anzahl von Zusehern.

**Fig. 6** zeigt ein Zustandsdiagramm mit allen Zuständen des erfindungsgemäßen Verfahrens.

**Fig. 7** zeigt die obere und untere Höhenschwelle sowie zwei Personen am Beginn des Drehvorgangs mit rechter bzw. linker gehobener Hand.

**Fig. 8 und 9** zeigen schematisch die Bestimmung des Drehwinkels gemäß einer ersten bevorzugten Ausführungsform der Erfindung.

**Fig. 10 bis 13** zeigen schematisch die Bestimmung des Drehwinkels gemäß einer zweiten bevorzugten Ausführungsform der Erfindung.

**Fig. 14** zeigt im Detail eine besondere Ausführungsform des Vorgehens während der Drehphase. **Fig. 15** zeigt schematisch die Datenübertragung in der erfindungsgemäßen Anordnung.

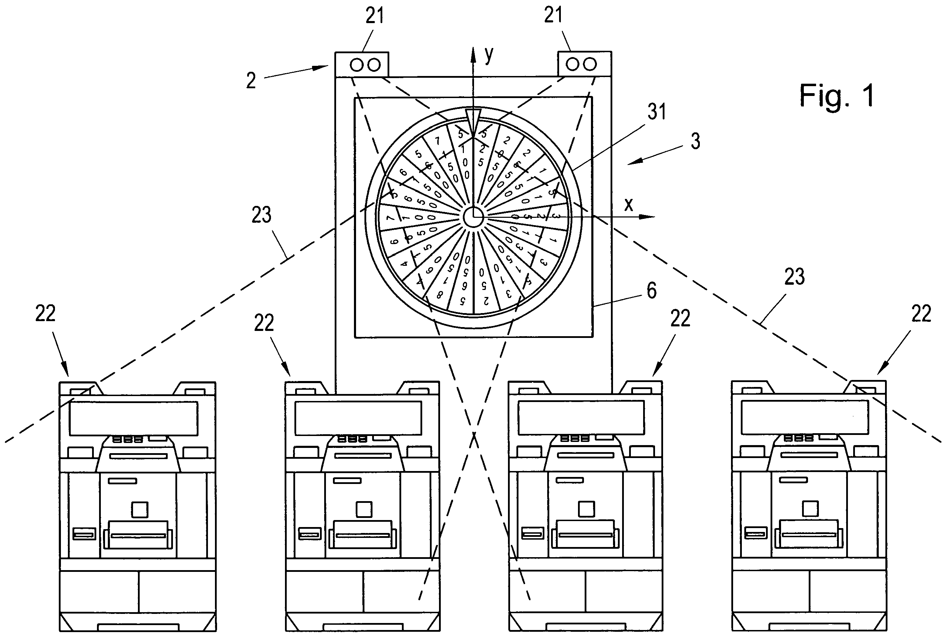

In **Fig. 1** ist eine Anordnung umfassend eine Anzeigeeinheit mit einem virtuellen Glücksrad 3 schematisch dargestellt. Die Anordnung weist eine dem Glücksrad 3 zugeordnete infrarotbasierende Kamera 2, insbesondere eine Tiefensensor-Kamera, mit zwei Sensoren 21 auf.

Eine solche Tiefensensorkamera ist beispielsweise in den Druckschriften WO 2011/013079 eingehend beschrieben. Ein Abbildungssystem der Kamera 2 projiziert Muster oder Abbild auf den Körper oder zumindest auf einen Teil des Körpers des Benutzers 1, das an der Oberfläche des Körpers aufscheint. Zur Bestrahlung verwendet das Abbildungssystem typischerweise Infrarotlicht. Ein Rechner im Abbildungssystem der Kamera 2 verarbeitet die mit den beiden Sensoren 21 aufgenommenen Bilder, wodurch eine Tiefeninformation erhalten wird. Als Tiefeninformation steht jeweils ein Array von dreidimensionalen Koordinaten zur Verfügung, wobei jedem Pixel eines mit einem Sensor aufgenommenen Bilds jeweils ein Wert in Form einer Z-Koordinate oder in Form einer Raumkoordinate zugewiesen ist. Der Rechner des Abbildungssystems der Kamera 2 erstellt ein dreidimensionales Punktmodell des Körpers des Benutzers 1, wobei zur Triangulierung der einzelnen Punkte nach den in den Veröffentlichungen WO 2007/043036, WO 2007/105205 und WO 2008/120217 beschriebenen Verfahrensschritten vorgegangen wird. Die Kamera 2 liefert für jedes der Pixel jeweils eine Tiefeninformation, insbesondere in Form des Abstands des Benutzers von der Kamera 2, gemessen entlang des Sehstrahls des jeweiligen Pixels.

Die Anordnung umfasst ferner vier Spielautomaten 22, an denen Benutzer 1 Spiele durchführen können. Die auf den Spielautomaten 22 gespielten Spiele können unterschiedlichen Inhalt haben. Gelangt das Spiel zu einem bestimmten Zustand, etwa zu einem Spielgewinn, wird ein Zwischenspiel gestartet, bei dem der an diesem Spielautomaten 22 spielende Benutzer 1 das Glücksrad 3 drehen muss. Nach der Drehung des Glücksrads 3 kann das Spiel abhängig vom Ausgang der Endstellung des Glücksrads 3 fortgesetzt werden, eine Auszahlung stattfinden oder das Spiel beendet werden. Besonders spannend kann das Spiel dann gestaltet werden, wenn ein Benutzer 1, der ein auf dem Spielautomaten 22 ablaufendes Spiel gewonnen hat, seinen Auszahlungsbetrag auf dem Glücksrad 3 selbst durch Drehen beeinflussen kann.

Anstelle eines virtuellen (digitalen) Glücksrades kann alternativ auch ein mechanisches Glücksrad angesteuert werden kann, wobei eine entsprechende mechanische leichtgewichtige Konstruktion mit einer geringen Rad-Masse vorteilhaft ist, um auch schnellen Handbewegungen zeitgerecht folgen zu können. Das mechanische Rad kann dabei über einen geeigneten Motor, beispielsweise ein Schrittmotor angesteuert werden.

Das Glücksrad 3 weist die oben beschriebene Kamera 2 mit zwei Sensoren 21 auf, die ein dreidimensionales Abbild der in ihrem Aufnahmebereich 23 befindlichen Szene erstellt. Wird das Glücksrad 3 aktiviert, werden laufend Abbilder der im Aufnahmebereich 23 befindlichen Szene erstellt, im vorliegenden besonderen Ausführungsbeispiel werden zehn Szenen pro Sekunde erstellt, d. h. es werden jede Sekunde zehn Aufnahmezeitpunkte vorgegeben, zu denen ein Abbild der Szene erstellt wird. Hierbei wird sowohl der Schwerpunkt 11 der jeweiligen Benutzer 1 detektiert sowie die Position der Hand 12 des jeweiligen Benutzers 1 detektiert. Der Schwerpunkt und die Position der Hand des Benutzers 1 liegen somit zu jedem Aufnahmezeitpunkt in Form von dreidimensionalen Koordinaten vor.

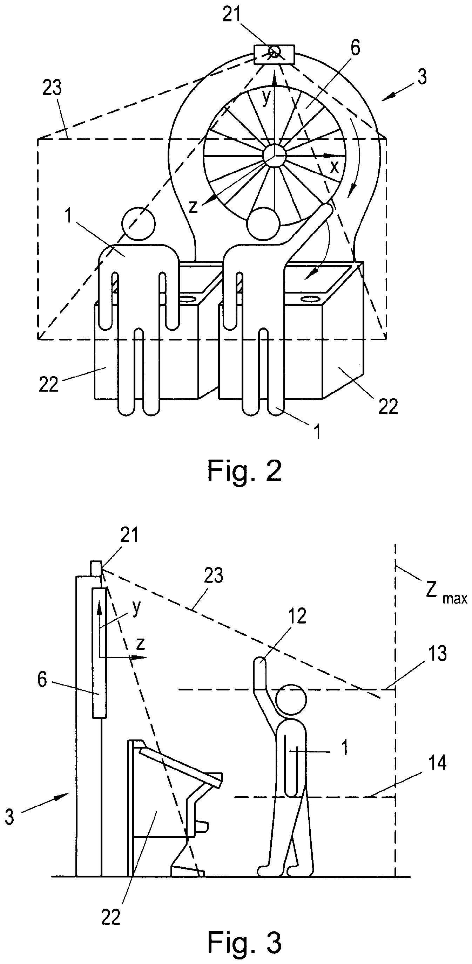

Die Orientierung der Koordinaten ist im vorliegenden Ausführungsbeispiel so gewählt, dass der Koordinatenursprung im Drehpunkt des Glücksrads 3 gewählt ist (Fig. 2, 3). Die Z-Achse ist normal zur Ebene des Glücksrads 3 angeordnet, die X-Achse verläuft horizontal zum Boden und die Y-Achse verläuft vertikal zum Boden. Ganz grundsätzlich kann jede beliebige andere Orientierung der Kamera 2 vorgegeben werden, wenn sämtliche Koordinaten mit einer Koordinatentransformation in das oben beschriebene Koordinatensystem transformiert werden.

In Bezug auf das Koordinatensystem wird ferner eine obere Höhenschwelle 13 und eine untere Höhenschwelle 14 vorgegeben. Die obere Höhenschwelle 13 wird im vorliegenden Ausführungsbeispiel absolut vorgegeben und befindet sich etwa zwei Meter oberhalb des Bodens. Alternativ kann die obere Höhenschwelle auch in Bezug auf die Y-Koordinate des Schwerpunkts 11 des Benutzers 1 festgelegt werden und etwa 60 bis 80 cm oberhalb der Y-Koordinate des Schwerpunkts 11 des jeweiligen Benutzers 1 festgelegt werden. Die untere Höhenschwelle 14 kann analog der oberen Höhenschwelle 13 entweder durch Angabe eines auf den Boden bezogenen Absolutwerts von etwa einem Meter oberhalb des Bodens oder durch einen auf die Y-Koordinate des Schwerpunkts 11 des jeweiligen Benutzers 1 bezogenen Wert festgelegt werden. So kann etwa ein Wert zwischen 40 und 60 cm unterhalb des Schwerpunkts des Benutzers 1 als untere Höhenschwelle 14 festgelegt werden.

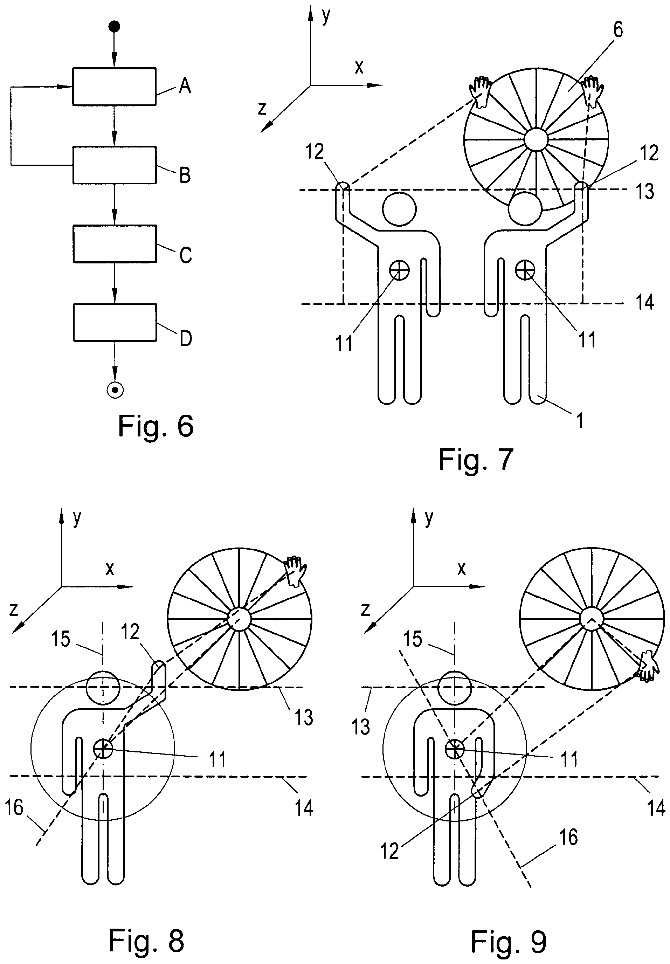

Das Drehen des Glücksrads 3 stellt bei dieser Ausführungsform der Erfindung ein Zwischenspiel in einem Automatenspiel dar. Sobald das Automatenspiel auf einen der Automaten 22 in einen Spielzustand gelangt, der das Zwischenspiel erfordert, wird das Zwischenspiel aktiviert, das Zwischenspiel wird in einen Initialzustand A (**Fig. 6**) gesetzt. Der Initialzustand dient dazu, dass sich der Benutzer 1 zum Drehen des Glücksrads bereit macht und seine Hand 12 in eine Position bringt, in der das Glücksrad 3 drehen kann. Da das Glücksrad 3 in dieser besonderen Ausführungsform der Erfindung von oben nach unten gedreht wird, sollte der Benutzer 1 seine Hand vor dem Drehen des Glücksrads 3 über der zuvor festgelegten oberen Höhenschwelle 13 heben.

Um das Heben der Hand 12 zu detektieren wird die Position der Hand ständig überwacht und neu bestimmt und die Y-Koordinate der Position der Hand mit der oberen Höhenschwelle 13 verglichen (**Fig. 7**). Sobald die Y-Koordinate der Position der Hand die obere Höhenschwelle 13 übersteigt, wird die Handhebegeste als vollendet angesehen. Das Spiel gelangt vom Initialzustand A in eine Drehphase B.

Während der Drehphase B bewegt der Benutzer 1 seine Hand 12 von oben nach unten, wobei die Drehgeschwindigkeit $\omega$ seiner Hand 12 festgestellt wird. Der Benutzer 1 vollführt mit seiner Hand 12 und seinem Arm anschließend eine halbkreisförmige Bewegung nach unten.

Während der Drehphase B wird die Position des Glücksrads 3 unmittelbar an die Position der Hand 12 gekoppelt. Hierbei soll dem Benutzer 1 das Gefühl vermittelt werden, dass er das Glücksrad 3 unmittelbar angreifen kann. Bewegungen der Hand 12 des Benutzers 1 sollen sich unmittelbar als Bewegungen des Glücksrads 3 auswirken. Zu diesem Zweck werden die Position des Schwerpunkts 11 des Benutzers 1 sowie die Position der Hand 12 des Benutzers 1 weiterhin laufend ermittelt. Die Position der Hand 12 des Benutzers 1 wird in Bezug auf das vorstehend definierte Koordinatensystem durch die Koordinaten hand_X, hand_Y und hand_Z angegeben, die Position des Schwerpunkts analog mit com_X, com_Y und com_Z. Mittels der folgenden Formel wird ein Drehwinkel $\alpha$ errechnet, der in weiterer Folge für die Drehung des Glücksrads 3 herangezogen wird.

$\alpha$ = atan2(hand_Y - com_Y, com_X - hand, X)

Der Drehwinkel $\alpha$ stellt den Winkel zwischen einer durch den Körperschwerpunkt 11 und die Position der Hand 12 verlaufende Geraden 16 und einer vorgegebenen senkrecht stehenden und durch den Körperschwerpunkt verlaufenden Bezugsgeraden 15 dar. (**Fig. 8, 9**)

Ändert sich der Drehwinkel $\alpha$ zwischen zwei Aufnahmezeitpunkten um einen vorgegebenen Wert $\Delta\alpha$, so ändert sich auch der Drehwinkel $\alpha$ des Glücksrads 3 um denselben Wert $\Delta\alpha$. Der Benutzer 1 hat somit durch die Bewegung seiner Hand 12 unmittelbaren Einfluss auf den Drehwinkel $\alpha$ des Glücksrads. Es wird somit im Wesentlichen eine unverzögerte Korrelation von weiteren Positionsveränderungen der hand 12 zur Drehbewegung des Glücksrads 3 hergestellt, so dass dem Benutzer 1 der Eindruck vermittelt ist, dass das Glücksrad 3 direkt mit seiner Hand 12 verbunden ist.

Die Änderung $\Delta\alpha$ des Drehwinkels $\alpha$ kann als Differenz zwischen dem Drehwinkel $\alpha$ an zu einem vorgegebenen Aufnahmezeitpunkt $t_n$ und dem Drehwinkel $\alpha_{n-1}$ zum unmittelbar vorangehenden Aufnamezeitpunkt $t_{n-1}$ ermittelt werden. Es ergibt sich somit:

$$\Delta\alpha = \alpha_n - \alpha_{n-1}$$

Kennt man die Differenz $\Delta\alpha$ zwischen den beiden Aufnahmezeitpunkten, so kann man die Drehgeschwindigkeit $\omega$ folgendermaßen berechnen:

$$\omega = \Delta\alpha / \Delta t = \Delta\alpha / (t_n - t_{n-1}) = \Delta\alpha * fps,$$

wobei fps der Anzahl der äquidistanten Aufnahmezeitpunkte pro Zeiteinheit entspricht. Diese Geschwindigkeit $\omega$ wird fortlaufend so lange bestimmt, bis die Position 12 der Hand die untere Höhenschwelle 14 unterschreitet.

Im Zuge der Drehung durch den Benutzer 1 wird die Position seiner Hand 12 sowie die Drehgeschwindigkeit $\omega$ kontinuierlich ermittelt. Unterschreitet die Position der Hand 12 die untere Höhenschwelle 14, so wird die Ermittlung der Drehgeschwindigkeit $\omega$ beendet und die zuletzt ermittelte Geschwindigkeit $\omega_e$ als Ausgangsgeschwindigkeit für die freie Rotationsphase C des Glücksrads herangezogen. (**Fig. 6**) Die Drehphase B wird beendet, es beginnt eine freie Rotationsphase C.

Während der freien Rotationsphase C wird die Bewegung eines realen Glücksrads 3 simuliert, bei der der Benutzer 1 keine Möglichkeit mehr hat, in die Rotation des Glücksrads 3 einzugreifen. Das Glücksrad 3 ist gleichsam sich selbst überlassen und kommt aufgrund seiner angenommenen Reibung von selbst zum Stillstand.

Zur Simulation der Drehung des Glücksrads 3 während der freien Rotationsphase C wird das Glücksrad 3 in periodischen Zeitabschnitten um bestimmte, d. h. der Drehwinkel $\alpha$ des Glücksrads 3 pro Zeiteinheit um einen vorgegebenen und von der Drehgeschwindigkeit $\omega$ abhängigen Wert erhöht, wobei die Drehgeschwindigkeit $\omega$ kontinuierlich reduziert wird, bis das Glücksrad 3 letztlich zum Stillstand kommt. Mit dem Stillstand des Glücksrads 3 ist die freie Rotationsphase C beendet. Aufgrund des Drehwinkels $\alpha$ im Zeitpunkt des Stillstands des Glücksrads 3 kann schließlich das Ergebnis der Drehung ermittelt werden.

Aufgrund dieses Ergebnisses kann etwa ein unterschiedlich hoher, dem Ergebnis der Drehung entsprechender Gewinnbetrag ausbezahlt werden, es können aber auch in einem Folgespiel unterschiedliche Anfangszustände gesetzt werden, d. h. das Folgespiel kann für den Benutzer 1 leichter oder weniger leicht zu gewinnen sein.

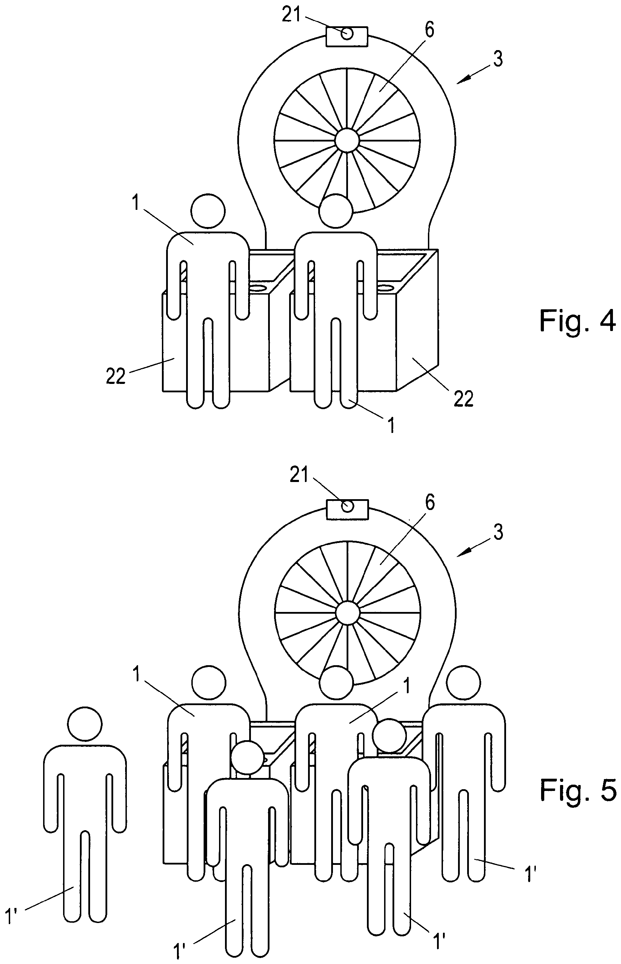

Befinden sich mehrere Benutzer 1 und Zuseher 1' im Aufnahmebereich der Kamera 2 (Fig. 5), so können in einer besonderen Weiterbildung der Erfindung Aufnahmeprobleme derart vermieden werden, dass lediglich der Schwerpunkt 11 und die Position der Hand 12 von denjenigen Benutzern 1 bestimmt werden, die innerhalb des Aufnahmebereichs der Kamera 2 als der Kamera 2 am nächsten identifiziert werden, d. h. deren Schwerpunkt 11 und Position der Hand 12 im vorliegenden Ausführungsbeispiel den geringsten Z-Koordinatenwert aufweisen.

Alternativ können auch die Hand- und Schwerpunktsposition von all denjenigen Benutzern 1 ermittelt werden, die sich innerhalb eines bestimmten Bereichs befinden, insbesondere, deren Z-Koordinatenwerte unterhalb einer vorgegebenen Abstandsschwelle Zmax (Fig. 3) befinden.

Eine weitere bevorzugte Ausführungsform der Erfindung zeigt anstelle des vorstehend dargestellten Vorgehens zur Bestimmung der Winkelgeschwindigkeit $\omega$ während der Drehphase B durch den Benutzer 1 ein vom Schwerpunkt 11 des Benutzers 1 unabhängiges Vorgehen, das im folgenden als vektorbasierte Drehgeschwindigkeitserkennung bezeichnet wird. Während des Initialzustands A sowie während der freien Rotationsphase C unterscheidet sich diese bevorzugte Ausführungsform nicht von der vorstehend genannten ersten Ausführungsform der Erfindung.

Während der Drehphase B wird bei dieser besonderen Ausführungsform der Erfindung lediglich die Position der Hand 12, jedoch nicht die Position des Körperschwerpunkts 11 des Benutzers 1 für die Ermittlung der Drehbewegung laufend detektiert. Die Position des Körperschwerpunkts 11 des Benutzers 1 wird lediglich ganz zu Beginn der Drehphase B ein einziges Mal ermittelt und braucht später nicht mehr ermittelt zu werden. Es ist insbesondere nicht erforderlich, dass der Benutzer 1 die Hand 12 um seinen Körperschwerpunkt 11 dreht, vielmehr kann jede kreisartige Handbewegung zum Drehen des Glücksrads 3 herangezogen werden. Wie beim ersten Ausführungsbeispiel der Erfindung wird die Position der Hand 12 des Benutzers 1 laufend zu vorgegebenen Zeitpunkten $t_n$ ermittelt.

In einem ersten Schritt werden bei der Drehphase B die Position des Körperschwerpunkts und der Hand einmalig ermittelt. Die X-Koordinatenwerte der Position des Körperschwerpunkts 11 und der Hand 12 werden verglichen, sodass ermittelt werden kann, ob eine Drehung mit der rechten Hand oder mit der linken Hand des Benutzers 1 erfolgt.

Nachdem ermittelt worden ist, auf welcher Seite des Körperschwerpunkts 11 sich die Hand 12 befindet, wird dieser ein initialer Drehwinkel $\alpha_0 = \alpha_{start}$ zugewiesen. Es wird im folgenden davon ausgegangen, dass sich die Hand 12 bei der Überschreitung der oberen Höhenschwelle 13 an ihrer höchsten Position befindet.

Das alternative Verfahren benötigt für die weitere Berechnung nicht mehr die Position des Körperschwerpunkts 11 des Benutzers 1 sondern kommt lediglich mit den einzelnen zu fortlaufenden Zeitpunkten aufgenommenen Positionen der Hand 12 aus. Es werden jeweils hintereinander aufgenommenen Handpositionen zur Bestimmung des Drehwinkels $\alpha$ herangezogen, wobei bei dieser Vorgehensweise versucht wird, Bewegungen der Hand 12, die für die Rotation nicht relevant sind, beispielsweise Bewegungen auf das Glücksrad 3 zu, d. h. in Z Richtung, oder Bewegungen in radialer Orientierung relativ zum Glücksrad 3, d. h. in Richtung zum oder vom Zentrum des Glücksrads 3, zu unterdrücken und nur jene Bewegungen heranzuziehen, die in Umfangsrichtung des Glücksrads 3 erfolgen.

Im vorliegenden Ausführungsbeispiel wird davon ausgegangen, dass sich die Ausgangsposition der rechten Hand 12 auf einem Ausgangswinkel von $\alpha_{start} = 30°$ befindet. Das Glücksrad 3 ist hierbei so orientiert, dass ein Winkel von 0° am höchsten Punkt des Glücksrads 3 vorliegt und ein Winkel von 180° am tiefsten Punkt des Glücksrads 3 vorliegt.

Der Benutzer 1 vollführt eine kreisartige Handbewegung beginnend mit einer Bewegung nach rechts unten, wobei die Hand 12 hintereinander zu unterschiedlichen Zeitpunkten unterschiedliche Positionen hp_0, hp_1, ... einnimmt. Die Koordinaten der einzelnen Positionen der Hand 12 des Benutzer 1 werden jeweils mit

$$hp\_0 = [hp\_0\_X,\ hp\_0\_Y,\ hp\_0\_Z],$$

$$hp\_1 = [hp\_1\_X,\ hp\_1\_Y,\ hp\_1\_Z],$$
$$hp\_2 = [hp\_2\_X,\ hp\_2\_Y,\ hp\_2\_Z],$$
$$....$$

bezeichnet. Zu zwei hintereinander aufgenommenen Zeitpunkten $t_0$ und $t_1$ werden jeweils die Handpositionen hp_0 und hp_1 ermittelt. Zum Zeitpunkt $t_1$ liegen dann sowohl die Koordinaten der Handposition hp_0 zum Zeitpunkt $t_0$ und hp_1 zum Zeitpunkt $t_1$ vor. Ausgehend von diesen beiden Werten werden die beiden Größen $\beta0$ und d0 nach den folgenden Formeln bestimmt (**Fig. 5**).

$$\beta0 = atan2(hp\_0\_Y - hp\_1\_Y, hp\_1\_X - hp\_0\_X) = 95°$$

$$d0 = \sqrt{((hp\_1\_X - hp\_0\_X)^2 + (hp\_1\_Y - hp\_0\_Y)^2)}$$

Für einen allgemeinen Zeitpunkt $t_n$ kann diese Werte folgendermaßen berechnet werden:

$$\beta n = atan2(hp\_n\_Y - hp\_n+1\_Y, hp\_n+1\_X - hp\_n\_X)$$

$$dn = \sqrt{((hp\_n+1\_X - hp\_n\_X)^2 + (hp\_n+1\_Y - hp\_n\_Y)^2)}$$

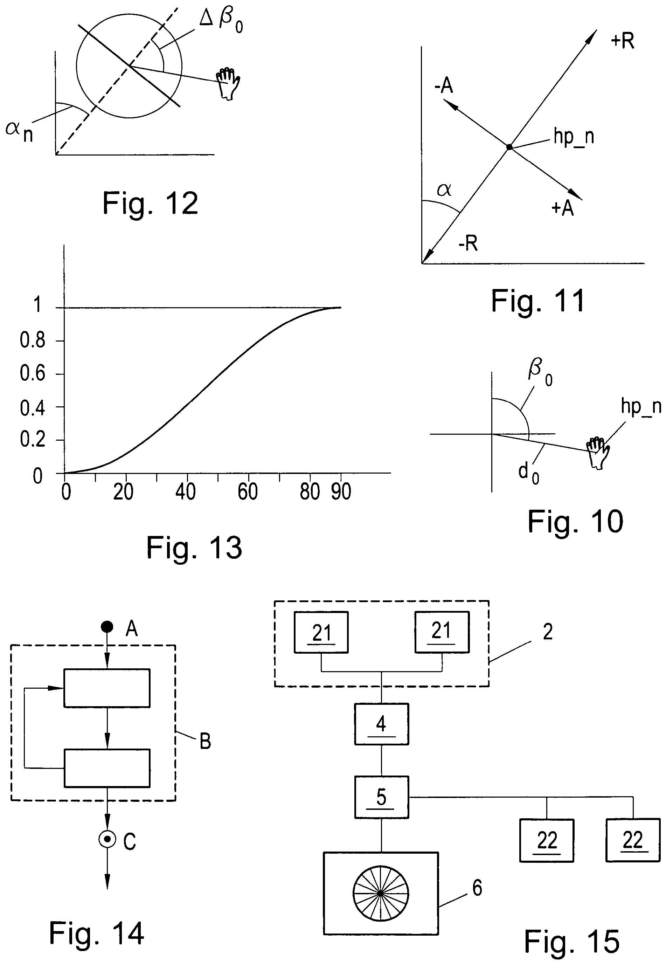

Der Abstand d0 entspricht hierbei dem Abstand zwischen den Handpositionen zum Zeitpunkt $t_0$ und $t_1$. **Fig. 11** zeigt die Handposition hp_0 im Ausgangswinkel von $\alpha\_0 = \alpha_{start} = 30°$. Ferner ist dargestellt, dass eine Bewegung in Richtung der Koordinatenrichtung +A eine unmittelbare Auswirkung auf den Drehwinkel $\alpha$ des Glücksrads 3 hat, während eine Bewegung entgegen dieser Koordinatenrichtung, d. h. in Richtung -A den Drehwinkel $\alpha$ entsprechend verringert. Eine Bewegung in radialer Richtung, d. h. in Bezug auf das Glücksrad 3 nach innen oder außen entlang der Koordinatenrichtung +R oder -R hat keinen Einfluss auf die Positionsänderung des Glücksrads 3, ebenso wenig, wie eine Bewegung vom Glücksrad 3 weg oder auf dieses zu.

Positionsänderungen, die nicht unmittelbar entlang einer der Koordinatenrichtungen, sondern schräg hierzu in einem Winkel $\Delta\beta0$ verlaufen, können gemäß den folgenden Vorschriften in Winkellängen umgerechnet werden. (Fig. 12)

$$\Delta\beta0 = \beta0 - \alpha\_0 = 65°$$

Dieser Winkel $\Delta\beta n$ wird für sämtliche Zeitpunkt t1, ..., tn bestimmt und wird allgemein mit

$$\Delta\beta n = \beta n - \alpha\_n$$

festgelegt. Schräg zu den jeweiligen Koordinatenrichtungen R, A stehende Bewegungen der Handposition können nunmehr derart berücksichtigt werden, dass die Änderung $\Delta\alpha$ des Drehwinkels $\alpha$ umso stärker ausfällt, umso mehr die Bewegung der Handposition in Richtung der Koordinatenrichtung A erfolgt. Unter Zuhilfenahme der in **Fig. 13** dargestellten Interpolationsfunktion f kann die Änderung $\Delta\alpha$ des Drehwinkels $\alpha$ folgendermaßen erfolgen.

$$fexp = f(\Delta\beta n)$$
$$\Delta\alpha n = d0 * fexp * fsensitivity$$

Im vorliegenden besonderen Ausführungsbeispiel entspricht die Interpolationsfunktion f der Sinusfunktion. Für eine Drehung des Glücksrads gegen den Uhrzeigersinn entspricht die Interpolationsfunktion $f(\alpha) = \sin(\alpha)$. Zum Zeitpunkt t=0 erfolgt eine Gewichtung mit $fexp = f(\Delta\beta n) = \sin(65°) \sim 0{,}8$.

$$\Delta\alpha n = d0 * \sin(\Delta\beta n) * fsensitivity$$

Die Sensitivität fsensitivity wird im vorliegenden Ausführungsbeispiel mit 0,3 angegeben, kann jedoch zwischen 0 und 1, insbesondere zwischen 0,1 und 0,4 variieren, je nachdem wie stark sich Änderungen der Position Handstellung auf die Stellung des Glücksrads auswirken sollen. Nachdem die Änderung $\Delta\alpha$ des Drehwinkels $\alpha$ festgelegt ist, kann auf Grundlage des zum Zeitpunkt tn vorliegenden Drehwinkels $\alpha$ zum Zeitpunkt tn ein Drehwinkel für den Zeitpunkt tn+1 ermittelt werden.

$$\alpha n+1 = \alpha n + \Delta\alpha$$

Für den ersten Zeitschritt nach dem Start der Drehphase ergibt sich somit:

$$\Delta\alpha = 25 * 0.8 * 0.3 = 6°$$

$$\alpha1 = 30° + 6° = 36°$$

Um Manipulationen des Glücksrads 3 zu vermeiden kann bei beiden dargestellten Ausführungsformen der Erfindung eine Mindestgeschwindigkeit vorgegeben werden, damit das Glücksrad in die freie Rotationsphase eintreten kann (**Fig. 14**). Sofern die Geschwindigkeit zu gering ist, kann wieder in die Initialphase A zurückgekehrt werden und es wird erneut auf das Heben der Hand 12 gewartet.

Die Drehphase B kann, wie im vorigen Ausführungsbeispiel dargestellt beendet werden, wenn eine unterer Höhenschwelle 14 unterschritten ist. Alternativ ist es jedoch auch möglich, dass die Drehphase B beendet wird, wenn die Änderung des Drehwinkels $\alpha$ einen vorgegebenen Schwellenwert überschreitet.

In einer noch weiteren Alternative ist es möglich, das die Drehphase B beendet wird, wenn eine bestimmte Winkeländerung vollführt ist, d. h. die Drehphase B wird zu einem Zeitpunkt $t\_n$ beendet, zu dem $\alpha\_n - \alpha\_0$ einen bestimmten Schwellenwert überschreitet. Kann während der Drehphase B die Position der Hand 12 des Benutzers 1 nicht mehr festgestellt oder ermittelt werden, so wird wieder in die Initialphase A zurückgekehrt und nach der Position der Hand 12 gesucht.

In der vorliegend beschriebenen Ausführungsform wird ein Drehvorgang beschrieben, der eine Drehung des Glücksrads 3 nach unten beschreibt. Somit wird auch eine obere Höhenschwelle 13 vorgegeben, deren Überschreitung die Drehphase B einleitet. Alternativ kann eine Drehung in einer horizontalen Ebenen oder von unten nach oben erfolgen. In diesem Fall wird eine Schwelle jeweils in Bezug auf die jeweilige Drehbewegung festgelegt. Unter der Höhenschwelle ist in diesem Fall eine Bereichsabgrenzung zu verstehen, bei deren Verlassen die Hand 12 die jeweilige Drehphase B auslöst.

In **Fig. 15** ist schematisch eine Anordnung mit einer Kamera 2 mit zwei Sensoren 21 dargestellt. Die von den zwei Sensoren 21 erzeugten Signale werden einer Erkennungseinheit 4 übermittelt, die bei Aktivierung die Position der Hand (12) sowie des Körperschwerpunkts 11 eines im Aufnahmebereich der Kamera 2 befindlichen Benutzers 1 ermittelt. Diese Aktivierung erfolgt durch eine mit der Erkennungseinheit 4 verbundenen Steuereinheit 5. Die Steuereinheit 5 ist mir den einzelnen Spielautomaten 22 verbunden und steuert ferner die Anzeigeeinheit an, die das Glücksrad 3 darstellt. Sofern ein Zwischenspiel gestartet werden soll, das das Drehen am Glücksrad 3 als Bestandteil enthält, wird vom jeweiligen Spielautomaten 22 ein Aktivierungssignal an die Steuereinheit 5 übermittelt. Die Spielautomaten 22 und die Steuereinheit 5 sind am selben Bus oder im selben Netzwerk angeordnet.

Bei Aktivierung wird die Steuereinheit 5 in einen Initialzustand gesetzt, bei dem die Steuereinheit 5 die Erfassungseinheit 4 zur Ermittlung der Positionen des Körperschwerpunkts 11 sowie zur laufenden Ermittlung der Position der Hand 12 des Benutzers 1 ansteuert und aktiviert. In dieser bevorzugten Ausführungsform weist die Steuereinheit 5 eine Vergleicheinheit zum Vergleich der ermittelten Position der Hand 12 mit einer vorgegebenen Höhenschwelle 13 auf. Bei Überschreitung oder beim Passieren dieser Höhenschwelle 13 durch die Position der Hand 12 wird der Initialzustand beendet und die Drehphase B startet.

Vorteilhafterweise werden die vorstehend genannten Vorgänge und Verfahrensschritte in der Kamera 2, der Erkennungseinheit 4 und der Steuereinheit 5 mit einem Mikrocomputer durchgeführt. Insbesondere werden die von der Kamera 2 abgegebenen Daten von der Erkennungseinheit 4 timergesteuert oder über eine Interruptsteuerung erfasst und weiter verarbeitet.

**Patentansprüche**

**1.** Verfahren zum Betrieb eines auf einem Monitor (6) dargestellten Glücksrads (3) durch einen Benutzer (1), wobei

- mittels einer Kamera (2) die Position des Körperschwerpunkts (11) und einer Hand (12) des Benutzers (1) ermittelt werden,
wobei mittels einer Steuereinheit (5)
- eine obere Höhenschwelle (13) auf einen vorgegebenen Wert in Relation zum Körperschwerpunkt (11) festgelegt wird und dass bei Überschreiten der Höhenschwelle (13) durch die Position der Hand (12) eine erste Phase gestartet wird, während der die Position der Hand (12) laufend ermittelt wird und während der die Position des Glücksrads (3) an die Position der Hand (12) gekoppelt wird,
- eine durch die Bewegung der Hand des Benutzers (1) vollführte Drehung laufend ermittelt wird und ein Drehwinkel ($\alpha$) ermittelt wird,
- die Winkelgeschwindigkeit ($\omega$), das ist die zeitliche Änderungsrate des ermittelten Winkels ($\alpha$), laufend bestimmt

wird,

- die erste Phase beendet wird und eine, vorzugsweise unmittelbar vor dem Ende der ersten Phase, laufend bestimmte Winkelgeschwindigkeit ($\omega$) als Ausgangsdrehgeschwindigkeit ($\omega_0$) festgestellt wird und

- nach dem Ende der ersten Phase eine freie Rotationsphase gestartet wird, wobei die weitere Drehung des Glücksrads (3) mit der Ausgangsdrehgeschwindigkeit ($\omega_0$) als Ausgangsgeschwindigkeit erfolgt und das Glücksrad (3) laufend gebremst wird und bei einer bestimmten Endposition zum Stillstand kommt und diese Endposition zur Verfügung gehalten wird, und

- wobei die erste Phase beendet und die freie Rotationsphase gestartet wird,

- wenn die Position der Hand (12) eine weitere, untere Höhenschwelle (14), welche auf einen vorgegebenen Wert, insbesondere auf einen vorgegebenen Wert unterhalb des Körperschwerpunkts (11), festgelegt wird, unterschreitet und/oder

- wenn der während der ersten Phase vom Glücksrad gegenüber der Ausgangsstellung zurückgelegte Winkel einen vorgegebenen Schwellenwert übersteigt und/oder wenn die Winkelgeschwindigkeit ($\omega$) einen vorgegebenen Schwellenwert übersteigt.

2. Verfahren nach Anspruch 1, **dadurch gekennzeichnet, dass** in zeitlichen Abständen der Drehwinkel ($\alpha$) als Winkel zwischen einer durch den Körperschwerpunkt (11) und die Position der Hand (12) verlaufenden Geraden (16) und einer vorgegebenen, insbesondere senkrecht stehenden, Bezugsgeraden (15) ermittelt wird.

3. Verfahren nach Anspruch 1 oder 2, **dadurch gekennzeichnet, dass** zu Beginn der ersten Phase der Drehwinkel ($\alpha$) auf einen Startwinkel astart = $\alpha\_0$ gesetzt wird und während der ersten Phase laufend zu vorgegebenen Zeitpunkten (tn) die Position (hp_n) der Hand (12) des Benutzers (1) ermittelt wird

$$hp\_n = [hp\_n\_X, \ hp\_n\_Y, \ hp\_n\_Z],$$

und dass zu jedem Zeitpunkt (tn) während der ersten Phase die folgenden Berechnungen durchgeführt werden,

$$\beta n = atan2(hp\_n\_Y - hp\_n+1\_Y, \ hp\_n+1\_X - hp\_n\_X)$$

$$dn = \sqrt{((hp\_n+1\_X - hp\_n\_X)^2 + (hp\_n+1\_Y - hp\_n\_Y)^2)}$$

$$\Delta\beta n = \beta n - \alpha\_n$$

$$fexp\_n = f(\Delta\beta n)$$

$$\Delta\alpha n = d0 * fexp\_n * fsensitivity$$

$$\alpha n = \alpha n-1 + \Delta\alpha n \qquad (tn)$$

wobei (an) der Drehwinkel des Glücksrads (3) zum Zeitpunkt (tn) ist und wobei vorzugsweise (f) die Sinusfunktion ist und wobei (f sensitivity) einen Wert zwischen 0 und 1, insbesondere zwischen 0,1 und 0,4, aufweist.

4. Verfahren nach einem der vorangehenden Ansprüche, **dadurch gekennzeichnet**, das die Position der Hand (12) im Zeitpunkt des Überschreitens der oberen Höhenschwelle mit der Position des Schwerpunkts (11) des Benutzers (1) in Bezug auf eine horizontal und normal zur Ebene des Glücksrads (3) verlaufenden Koordinatenrichtung verglichen wird und abhängig von diesem Vergleich eine Drehung des Glücksrads im Urzeigersinn oder gegen den Uhrzeigersinn angenommen wird.

5. Verfahren nach einem der vorangehenden Ansprüche, **dadurch gekennzeichnet, dass** das Glücksrad (3) während der ersten Phase und/oder während der freien Rotationsphase bei seinem jeweiligen Drehwinkel ($\alpha$) auf einem Monitor (6) dargestellt wird und diese Darstellung in vorgegebenen Intervallen aktualisiert wird, sodass eine Drehbewegung des Glücksrads (3) auf dem Monitor (6) wahrgenommen wird.

6. Verfahren nach einem der vorangehenden Ansprüche, **dadurch gekennzeichnet, dass** die Ermittlung der Position des Körperschwerpunkts (11) sowie der Hand (12) des Benutzers (1) mittels einer 3D-Kamera (2) oder einer infrarotbasierten Tiefensensorkamera erfolgt, wobei für eine Anzahl von Pixeln der jeweiligen Kamera (2) jeweils eine Distanzinformation zur Kamera (2) ermittelt wird.

7. Verfahren nach einem der vorangehenden Ansprüche, **dadurch gekennzeichnet, dass** von denjenigen Benutzern (1), die sich im Aufnahmebereich der Kamera (2) befinden, ausschließlich derjenige Benutzer (1) zur Ermittlung der Drehbewegung des Glücksrads herangezogen wird, der der Kamera (2) am nächsten ist.

8. Anordnung umfassend eine Anzeigeeinheit mit einem Monitor (6) zur Darstellung eines Glücksrads (3) sowie eine Erfassungseinheit (4) mit einer Kamera (2) zur Aufnahme eines das Glücksrad (3) drehenden Benutzers (1),

   - wobei die Anzeigeeinheit das Glücksrad (3) zu vorgegebenen Zeitpunkten mit einem vorgegebenen Drehungswinkel ($\alpha$) darstellt,
   - wobei die Erfassungseinheit (4) bei Aktivierung die Position der Hand (12) sowie des Körperschwerpunkts (11) eines im Aufnahmebereich der Kamera (2) befindlichen Benutzers (1) ermittelt, weiter umfassend eine an die Erfassungseinheit (4) sowie an die Anzeigeeinheit angeschlossene Steuereinheit (5),
   - wobei die Steuereinheit (5) bei Aktivierung in einen Initialzustand setzbar ist, bei dem die Steuereinheit (5) die Erfassungseinheit (4) zur Ermittlung der Positionen des Körperschwerpunkts (11) sowie zur laufenden Ermittlung der Position der Hand (12) des Benutzers (1) ansteuert,
   - wobei die Steuereinheit (5) eine Vergleichseinheit zum Vergleich der ermittelten Position der Hand (12) mit einer in Bezug auf den Körperschwerpunkt vorgegebenen oberen Höhenschwelle (13) vornimmt und bei Überschreitung der oberen Höhenschwelle (13) durch die Position der Hand (12) den Initialzustand beendet und eine erste Phase startet,
   - wobei die Steuereinheit (5) während der ersten Phase die Position der Hand (12) laufend ermittelt und den durch die Bewegung der Hand (12) des Benutzers (1) vollführten Drehwinkel ($\alpha$) laufend ermittelt, wobei sie weiters die Winkelgeschwindigkeit ($\omega$), das ist die zeitliche Änderungsrate des ermittelten Winkels ($\alpha$), laufend bestimmt und die Position des Glücksrads (3) an die Position der Hand (12) koppelt,
   - wobei die Steuereinheit (5) die erste Phase beendet und die unmittelbar vor dem Ende der ersten Phase ermittelte Winkelgeschwindigkeit ($\omega$) als Ausgangsdrehgeschwindigkeit ($\omega_0$), ermittelt und
   - wobei die Steuereinheit (5) nach dem Ende der ersten Phase eine freie Rotationsphase startet, während der die weitere Drehung des Glücksrads (3) mit der so ermittelten Ausgangsdrehgeschwindigkeit ($\omega_0$) vorgenommen wird und das Glücksrad (3) laufend gebremst wird und bei einer bestimmten Endposition zum Stillstand kommt und die Steuereinheit (5) diese Endposition zur Verfügung hält,
   - wobei die Steuereinheit (5) die erste Phase beendet und die freie Rotationsphase startet,
   - wenn die Position der Hand (12) eine weitere, untere Höhenschwelle (14), welche auf einen vorgegebenen Wert, insbesondere auf einen vorgegebenen Wert unterhalb des Körperschwerpunkts (11), festgelegt wird, unterschreitet und/oder
   - wenn der während der ersten Phase vom Glücksrad (3) gegenüber der Ausgangsstellung zurückgelegte Drehwinkel ($\alpha$) einen vorgegebenen Schwellenwert übersteigt und/oder wenn die Winkelgeschwindigkeit ($\omega$) einen vorgegebenen Schwellenwert übersteigt.

9. Anordnung nach Anspruch 8, **dadurch gekennzeichnet, dass** die Steuereinheit (5) eine Drehwinkelbestimmungseinheit aufweist, die in zeitlichen Abständen den Drehwinkel ($\alpha$) als Winkel zwischen einer durch den Körperschwerpunkt (11) und die Position der Hand (12) verlaufenden Geraden (16) und einer vorgegebenen, insbesondere senkrecht stehenden, Bezugsgeraden (15) ermittelt.

10. Anordnung nach Anspruch 8 oder 9, **dadurch gekennzeichnet, dass** die Steuereinheit (5) eine Drehwinkelbestimmungseinheit aufweist, die

    - zu Beginn der ersten Phase den Drehwinkel ($\alpha$) auf einen vorgegebenen Startwinkel astart = $\alpha\_0$ setzt
    - während der ersten Phase laufend zu vorgegebenen Zeitpunkten (tn) die Position (hp_n) der Hand (12) des Benutzers (1) ermittelt

$$hp\_n = [hp\_n\_X, \ hp\_n\_Y, \ hp\_n\_Z],$$

und
- zu jedem Zeitpunkt (tn) während der ersten Phase die folgenden Berechnungen durchführt:

$$\beta n = atan2(hp\_n\_Y - hp\_n+1\_Y, hp\_n+1\_X - hp\_n\_X)$$

$$dn = \sqrt{((hp\_n+1\_X - hp\_n\_X)^2 + (hp\_n+1\_Y - hp\_n\_Y)^2)}$$

$$\Delta\beta n = \beta n - \alpha\_n$$

$$fexp\_n = f(\Delta\beta n)$$

$$\Delta\alpha n = d0 * fexp\_n * fsensitivity$$

$$\alpha n = \alpha n-1 + \Delta\alpha n$$

wobei (an) der Drehwinkel ($\alpha$) des Glücksrads (3) zum Zeitpunkt (tn) ist, und wobei vorzugsweise (f) die Sinusfunktion ist und wobei (fsensitivity) einen Wert zwischen 0 und 1, insbesondere zwischen 0,1 und 0,4, aufweist.

**11.** Anordnung nach einem der Ansprüche 8 bis 10, **gekennzeichnet durch** eine weitere Vergleichseinheit, die die Position der Hand (12) im Zeitpunkt des Überschreitens der oberen Höhenschwelle mit der Position des Schwerpunkts (11) des Benutzers (1) in Bezug auf eine normal zur Ebene des Glücksrads (3) und horizontal verlaufende Koordinatenrichtung vergleicht und abhängig von diesem Vergleich ermittelt, ob eine Drehung des Glücksrads (3) im Urzeigersinn oder gegen den Uhrzeigersinn stattfindet.

**12.** Anordnung nach einem der Ansprüche 8 bis 11, **dadurch gekennzeichnet, dass** die Anzeigeeinheit das Glücksrad (3) während der ersten Phase und/oder während der freien Rotationsphase bei seinem jeweiligen Drehwinkel ($\alpha$) auf dem Monitor (6) darstellt und diese Darstellung in vorgegebenen Intervallen aktualisiert, sodass eine Drehbewegung des Glücksrads (3) auf dem Monitor (6) wahrnehmbar ist.

**13.** Anordnung nach einem der Ansprüche 8 bis 12, **dadurch gekennzeichnet, dass** die Kamera (2) eine 3D-Kamera oder eine infrarotbasierte Tiefensensorkamera ist, mit deren Hilfe für eine Anzahl von Pixeln jeweils eine Distanzinformation zur Kamera (2) ermittelbar ist.

**14.** Anordnung nach einem der Ansprüche 8 bis 13, **dadurch gekennzeichnet, dass** eine Auswahleinheit vorgesehen ist, die von denjenigen Benutzern (1), die sich im Aufnahmebereich der Kamera (2) befinden, ausschließlich denjenigen Benutzer (1) zur Ermittlung der Drehbewegung des Glücksrads (3) auswählt, der der Kamera (2) am nächsten ist.

**Claims**

**1.** A method for operating a wheel of fortune (3) shown on a monitor (6) by a user (1), wherein

- by means of a camera (2) the position of the body's centre of gravity (11) and one hand (12) of the user (1) is determined,
wherein by means of a control unit (5)
- an upper height threshold (13) is set at predefined value in relation to the body's centre of gravity (11) and upon exceeding the height threshold (13) by the position of the hand (12) a first phase is started, during which the position of the hand (12) is continually determined and during which the position of the wheel of fortune (3) is coupled to the position of the hand (12),
- a rotation being performed by the movement of the hand of the user (1) is continually determined and a rotational angle ($\alpha$) is determined,

- the angular speed ($\omega$), i.e. the temporal change rate of the determined angle ($\alpha$), is continually calculated,
- the first phase is ended and a, preferably directly before the end of the first phase, continually calculated angular speed ($\omega$) is identified as the output rotational speed ($\omega_0$) and
- after the end of the first phase a free rotation phase is started, wherein the further rotation of the wheel of fortune (3) occurs with the output rotational speed ($\omega_0$) as the output speed and the wheel of fortune (3) is continually decelerated and comes to a standstill at a certain end position and this end position is kept available, and
- wherein the first phase ends and the free rotation phase is started
- when the position of the hand (12) falls below a further, lower height threshold (14), which is set at a predefined value, particularly at a predefined value below the body's centre of gravity (11), and/or
- when the angle covered during the first phase of the wheel of fortune exceeds a predefined threshold value when compared with the starting position and/or when the angular speed ($\omega$) exceeds a predefined threshold value.

2. The method according to claim 1, **characterised in that** at time intervals the rotational angle ($\alpha$) is determined as the angle between a straight line (16) running through the body's centre of gravity (11) and the position of the hand (12) and a predefined, particularly vertically positioned reference line (15).

3. The method according to claim 1 or 2, **characterised in that** the rotational angle ($\alpha$) is set to a starting angle $\alpha$ start $= \alpha\_0$ at the start of the first phase and
during the first phase continually at predefined time points (tn) the position (hp_n) of the hand (12) of the user (1) is determined

$$hp\_n = [hp\_n\_X, hp\_n\_Y, hp\_n\_Z],$$

and that at each time point (tn) during the first phase the following calculations are carried out,

$$ßn = atan2(hp\_n\_Y - hp\_n+1\_Y, hp\_n+1\_X - hp\_n\_X)$$

$$dn = \sqrt{((hp\_n+1\_X - hp\_n\_X)^2 + (hp\_n+1\_Y - hp\_n\_Y)^2)}$$

$$\Delta ßn = ßn - \alpha\_n$$

$$fexp\_n = f(\Delta ßn)$$

$$\Delta \alpha n = d0 * fexp\_n * fsensitivity$$

$$\alpha n = \alpha n-1 + \Delta \alpha n$$

wherein (an) is the rotational angle of the wheel of fortune (3) at the time point (tn) and wherein preferably (f) is the sine function and wherein (fsensitivity) has a value between 0 and 1, particularly between 0.1 and 0.4.

4. The method according to one of the preceding claims, **characterised in that** the position of the hand (12) at the time point of exceeding the upper height threshold is compared with the position of the focus (11) of the user (1) in relation to a coordinate direction running horizontally and normally to the plane of the wheel of fortune (3) and depending on this comparison a rotation of the wheel of fortune is taken in the clockwise direction or counter-clockwise direction.

5. The method according to one of the preceding claims, **characterised in that** the wheel of fortune (3) during the first phase and/or during the free rotation phase is shown on a monitor (6) at its relevant rotational angle ($\alpha$) and this display is updated in predefined intervals, such that a rotating movement of the wheel of fortune (3) is perceived on the monitor (6).

6. The method according to one of the preceding claims, **characterised in that** the determination of the position of the body's centre of gravity (11) and the hand (12) of the user (1) occurs by means of a 3D camera (2) or an infrared-based depth sensor camera, wherein distance information to the camera (2) is determined for each of a number of pixels of the relevant camera (2).

7. The method according to one of the preceding claims, **characterised in that** of those users (1) being located in the recording area of the camera (2), only the user (1) closest to the camera (2) is used for determining the rotating movement of the wheel of fortune.

8. An arrangement comprising a display unit with a monitor (6) for displaying a wheel of fortune (3) and a recording unit (4) with a camera (2) for recording a user (1) rotating the wheel of fortune (3),

- wherein the display unit displays the wheel of fortune (3) at predefined time points with a predefined rotational angle ($\alpha$),
- wherein the recording unit (4) upon activation determines the position of the hand (12) and the body's centre of gravity (11) of a user (1) being located within the recording area of the camera (2),
further comprising a control unit (5) being connected to the recording unit (4) and to the display unit,
- wherein the control unit (5) upon activation can be set in an initial state, in which the control unit (5) controls the recording unit (4) for determining the positions of the body's centre of gravity (11) and for continually determining the position of the hand (12) of the user (1),
- wherein the control unit (5) performs a comparison unit for comparing the determined position of the hand (12) with an upper height threshold (13) being predefined in relation to the body's centre of gravity and upon exceeding the upper height threshold (13) by the position of the hand (12) ends the initial state and starts a first phase,
- wherein the control unit (5) during the first phase continually determines the position of the hand (12) and continually determines the rotational angle ($\alpha$) being performed by the movement of the hand (12) of the user (1), wherein it further continually determines the angular speed ($\omega$), i.e. the temporal change rate of the calculated angle ($\alpha$), and the position of the wheel of fortune (3) coupled to the position of the hand (12),
- wherein the control unit (5) ends the first phase and determines the angular speed ($\omega$) being determined directly before the end of the first phase as the output rotational speed ($\omega_0$) and
- wherein the control unit (5) after the end of the first phase starts a free rotation phase, during which the further rotation of the wheel of fortune (3) with the so determined output rotational speed ($\omega_0$) is carried out and the wheel of fortune (3) is continually decelerated and comes to a standstill at a certain end position and the control unit (5) keeps this end position,
- wherein the control unit (5) ends the first phase and starts the free rotation phase
- when the position of the hand (12) falls below a further, lower height threshold (14), which is set at a predefined value, particularly at a predefined value below the body's centre of gravity (11), and/or
- when the rotational angle ($\alpha$) covered during the first phase of the wheel of fortune (3) in comparison with the starting position exceeds a predefined threshold value and/or when the angular speed ($\omega$) exceeds a predefined threshold value.

9. The arrangement according to claim 8, **characterised in that** the control unit (5) has a rotational angle determining unit, which at time intervals determines the rotational angle ($\alpha$) as the angle between a straight line (16) running through the body's centre of gravity (11) and the position of the hand (12) and a predefined, particularly vertically positioned reference line (15).

10. The arrangement according to claim 8 or 9, **characterised in that** the control unit (5) has a rotational angle determining unit, which

- sets the rotational angle ($\alpha$) to a starting angle $\alpha start = \alpha\_0$ at the start of the first phase
- continually determines the position (hp_n) of the hand (12) of the user (1) during the first phase at predefined time points (tn)

$$hp\ n = [hp\_n\_X, hp\_n\_Y, hp\_n\_Z],$$

and

- and carries out at each time point (tn) during the first phase the following calculations:

$$ßn = atan2(hp\_n\_Y - hp\_n{+}1\_Y, hp\_n{+}1\_X - hp\_n\_X)$$

$$dn = \sqrt{((hp\_n{+}1\_X - hp\_n\_X)2 + (hp\_n{+}1\_Y - hp\_n\_Y)^2)}$$

$$\Delta ßn = ßn - \alpha\_n$$

$$fexp\_n = f(\Delta ßn)$$

$$\Delta \alpha n = d0 * fexp\_n * fsensitivity$$

$$\alpha n = \alpha n{-}1 + \Delta \alpha n$$

wherein (an) is the rotational angle ($\alpha$) of the wheel of fortune (3) at the time point (tn) and wherein preferably (f) is the sine function and wherein (fsensitivity) has a value between 0 and 1, particularly between 0.1 and 0.4.

11. The arrangement according to one of claims 8 to 10, **characterised by** a further comparison unit, which compares the position of the hand (12) at the time point of exceeding the upper height threshold with the position of the focus (11) of the user (1) in relation to a coordinate direction running horizontally and normally to the plane of the wheel of fortune (3) and determines depending on this comparison whether a rotation of the wheel of fortune (3) is taking place in the clockwise direction or counter-clockwise direction.

12. The arrangement according to one of claims 8 to 11, **characterised in that** the display unit displays the wheel of fortune (3) during the first phase and/or during the free flotation phase at its relevant rotational angle ($\alpha$) on a monitor (6) and this display is updated in predefined intervals, such that a rotating movement of the wheel of fortune (3) is perceived on the monitor (6).

13. The arrangement according to one of claims 8 to 12, **characterised in that** the camera (2) is a 3D camera or an infrared-based depth sensor camera, with the help of which distance information to the camera (2) is determined for each of a number of pixels.

14. The arrangement according to one of claims 8 to 13, **characterised in that** a selecting unit is provided, which selects of those users (1) being located in the recording area of the camera (2) only the user (1) closest to the camera (2) for determining the rotating movement of the wheel of fortune (3).

## Revendications

1. Procédé d'utilisation d'une roue de la fortune (3) représentée sur un écran (6) par un utilisateur (1), dans lequel

- au moyen d'une caméra (2), la position du centre de gravité du corps (11) et une main (12) de l'utilisateur (1) sont déterminées,
dans lequel, au moyen d'une unité de commande (5)
- un seuil de hauteur supérieur (13) est fixé à une valeur prédéfinie en relation avec le centre de gravité du corps (11) et, lorsque le seuil de hauteur (13) est dépassé par la position de la main (12), une première phase est démarrée, pendant laquelle la position de la main (12) est déterminée en continu et pendant laquelle la position de la roue de la fortune (3) est couplée à la position de la main (12),
- une rotation réalisée par le mouvement de la main de l'utilisateur (1) est déterminée en continu et un angle de rotation ($\alpha$) est déterminé,
- la vitesse angulaire ($\omega$), c'est-à-dire le taux de changement temporel de l'angle ($\alpha$) déterminé, est calculée en continu,

- la première phase est achevée et une vitesse angulaire ($\omega$) déterminée en continu, de préférence immédiatement avant la fin de la première phase, est fixée en tant que vitesse de rotation de départ ($\omega_0$) et

- après la fin de la première phase, une phase de rotation libre est démarrée, dans lequel la rotation ultérieure de la roue de la fortune (3) est effectuée avec la vitesse de rotation de départ ($\omega_0$) comme vitesse de départ et la roue de la fortune (3) est freinée en continu et vient s'arrêter sur une position finale déterminée et cette position finale est maintenue à disposition et

- dans lequel la première phase est achevée et la phase de rotation libre est démarrée

- lorsque la position de la main (12) passe sous un autre seuil de hauteur inférieur (14), qui est fixé à une valeur prédéfinie, notamment à une valeur prédéfinie inférieure au centre de gravité du corps (11) et/ou

- lorsque l'angle parcouru pendant la première phase par la roue de la fortune par rapport à la position de départ dépasse une valeur seuil prédéfinie et/ou lorsque la vitesse angulaire ($\omega$) dépasse une valeur seuil prédéfinie.

2. Procédé selon la revendication 1, **caractérisé en ce que** l'angle de rotation ($\alpha$) est déterminé, à intervalles temporels, comme l'angle entre une ligne droite (16) s'étendant entre le centre de gravité du corps (11) et la position de la main (12) et une droite de référence (15) prédéfinie, notamment perpendiculaire.

3. Procédé selon la revendication 1 ou 2, **caractérisé en ce que**, au début de la première phase, l'angle de rotation ($\alpha$) est défini sur un angle de départ $\alpha\text{start} = \alpha\_0$ et

pendant la première phase, en continu à des moments prédéfinis (tn), la position (hp_n) de la main (12) de l'utilisateur (1) est déterminée

$$hp\_n = [hp\_n\_X, hp\_n\_Y, hp\_n\_Z],$$

et **en ce que**, à chaque moment (tn) pendant la première phase, les calculs suivants sont réalisés

$$\text{ßn} = \text{atan2}(hp\_n\_Y - hp\_n+1\_Y, hp\_n+1\_X - hp\_n\_X)$$

$$dn = \sqrt{((hp\_n+1\_X - hp\_n\_X)^2 + (hp\_n+1\_Y - hp\_n\_Y)^2)}$$

$$\Delta\text{ßn} = \text{ßn} - \alpha\_n$$

$$fexp\_n = f(\Delta\text{ßn})$$

$$\Delta\alpha n = d0 * fexp\_n * fsensitivity$$

$$\alpha n = \alpha n\text{-}1 + \Delta\alpha n$$

où ($\alpha n$) est l'angle de rotation de la roue de la fortune (3) au moment (tn) et où de préférence (f) est la fonction sinusoïdale et où (fsensitivity) présente une valeur entre 0 et 1, notamment entre 0,1 et 0,4.

4. Procédé selon une des revendications précédentes, **caractérisé en ce que** la position de la main (12) est comparée, au moment du dépassement du seuil de hauteur supérieur, à la position du centre de gravité (11) de l'utilisateur (1) par rapport à une direction de coordonnées s'étendant à l'horizontale et la verticale au plan de la roue de la fortune (3) et, en fonction de cette comparaison, une rotation de la roue de la fortune est présumée dans le sens des aiguilles d'une montre ou dans le sens inverse.

5. Procédé selon une des revendications précédentes, **caractérisé en ce que** la roue de la fortune (3) est représentée pendant la première phase et/ou pendant la phase de rotation libre par son angle de rotation respectif ($\alpha$) sur un écran (6) et cette représentation est actualisée à intervalles prédéfinis, de sorte qu'un mouvement de rotation de la roue de la fortune (3) soit perçu sur l'écran (6).

**6.** Procédé selon une des revendications précédentes, **caractérisé en ce que** la détermination de la position du centre de gravité du corps (11) ainsi que de la main (12) de l'utilisateur (1) est effectuée au moyen d'une caméra 3D (2) ou d'une caméra de détection de profondeur basée sur l'infrarouge, dans lequel pour un nombre de pixels de la caméra respective (2), une information de distance par rapport à la caméra (2) est respectivement déterminée.

**7.** Procédé selon une des revendications précédentes, **caractérisé en ce que** l'utilisateur (1) qui est situé le plus proche de la caméra (2) est exclusivement retenu parmi les utilisateurs respectifs (1) qui se trouvent dans la zone de prise de vues de la caméra (2), pour la détermination du mouvement de rotation de la roue de la fortune.

**8.** Installation comprenant une unité d'affichage avec un écran (6) pour la représentation d'une roue de la fortune (3) ainsi qu'une unité d'enregistrement (4) avec une caméra (2) pour la prise de vue d'un utilisateur (1) faisant tourner la roue de la fortune (3),

- dans laquelle l'unité d'affichage représente la roue de la fortune (3) à des moments prédéfinis avec un angle de rotation prédéfini ($\alpha$),
- dans laquelle l'unité d'enregistrement (4) lorsqu'elle est activée, détermine la position de la main (12) ainsi que du centre de gravité du corps (11) d'un utilisateur (1) se trouvant dans la zone de prise de vues de la caméra (2),

comprenant en outre une unité de commande (5) raccordée à l'unité d'enregistrement (4) ainsi qu'à l'unité d'affichage,

- dans laquelle l'unité de commande (5), lorsqu'elle est activée, peut être réglée dans un état initial, dans lequel l'unité de commande (5) commande l'unité d'enregistrement (4) pour déterminer les positions du centre de gravité du corps (11) ainsi que pour déterminer en continu la position de la main (12) de l'utilisateur (1),
- dans laquelle l'unité de commande (5) assume le rôle d'une unité de comparaison pour la comparaison de la position déterminée de la main (12) à un seuil de hauteur supérieur (13) prédéfini par rapport au centre de gravité du corps et, lors du dépassement du seuil de hauteur supérieur (13) par la position de la main (12), met fin à l'état initial et démarre une première phase,
- dans laquelle l'unité de commande (5) détermine la position de la main (12) en continu pendant la première phase et détermine en continu l'angle de rotation ($\alpha$) parcouru par le mouvement de la main (12) de l'utilisateur (1), dans laquelle elle détermine en continu en outre la vitesse angulaire ($\omega$), c'est-à-dire le taux de modification temporel de l'angle déterminé ($\alpha$) et couple la position de la roue de la fortune (3) à la position de la main (12),
- dans laquelle l'unité de commande (5) met fin à la première phase et détermine la vitesse angulaire ($\omega$) déterminée immédiatement avant la fin de la première phase comme vitesse de rotation de départ ($\omega_0$) et
- dans laquelle l'unité de commande (5) démarre une phase de rotation libre après la fin de la première phase, pendant laquelle la rotation ultérieure de la roue de la fortune (3) est présumée avec la vitesse de rotation de départ ($\omega_0$) ainsi déterminée et la roue de la fortune (3) est freinée en continu et s'arrête au niveau d'une position finale déterminée et l'unité de commande (5) maintient cette position finale à disposition,
- dans laquelle l'unité de commande (5) met fin à la première phase et démarre la phase de rotation libre,
- lorsque la position de la main (12) passe sous un autre seuil de hauteur inférieur (14), qui est fixé à une valeur prédéfinie, notamment à une valeur prédéfinie inférieure au centre de gravité du corps (11) et/ou
- lorsque l'angle de rotation ($\alpha$) parcouru pendant la première phase par la roue de la fortune (3) par rapport à la position de départ dépasse une valeur seuil prédéfinie et/ou lorsque la vitesse angulaire ($\omega$) dépasse une valeur seuil prédéfinie.

**9.** Installation selon la revendication 8, **caractérisée en ce que** l'unité de commande (5) présente une unité de détermination d'angle de rotation, qui détermine l'angle de rotation ($\alpha$) à intervalles temporels, comme l'angle entre une ligne droite (16) s'étendant entre le centre de gravité du corps (11) et la position de la main (12) et une droite de référence (15) prédéfinie, notamment perpendiculaire.

**10.** Installation selon la revendication 8 ou 9, **caractérisée en ce que** l'unité de commande (5) présente une unité de détermination d'angle de rotation qui

- définit, au début de la première phase, l'angle de rotation ($\alpha$) à un angle de départ prédéfini $\alpha start = \alpha\_0$
- détermine, pendant la première phase, en continu à des moments prédéfinis (tn), la position (hp_n) de la main (12) de l'utilisateur (1)

$$hp\ n = [hp\_n\_X, hp\_n\_Y, hp\_n\_Z]$$

et
- réalise, à chaque moment (tn) pendant la première phase, les calculs suivants :

$$\text{ßn} = \text{atan2(hp\_n\_Y - hp\_n+1\_Y, hp\_n+1\_X - hp\_n\_X)}$$

$$\text{dn} = \sqrt{((\text{hp\_n+1\_X - hp\_n\_X})2 + (\text{hp\_n+1\_Y - hp\_n\_Y})^2)}$$

$$\Delta\text{ßn} = \text{ßn} - \alpha\_n$$

$$\text{fexp\_n} = f(\Delta\text{ßn})$$

$$\Delta\alpha\text{n} = \text{d0} * \text{fexp\_n} * \text{fsensitivity}$$

$$\alpha\text{n} = \alpha\text{n-1} + \Delta\alpha\text{n}$$

où (an) est l'angle de rotation ($\alpha$) de la roue de la fortune (3) au moment (tn) et où de préférence (f) est la fonction sinusoïdale et où (fsensitivity) présente une valeur entre 0 et 1, notamment entre 0,1 et 0,4.

**11.** Installation selon une des revendications 8 à 10, **caractérisée par** une autre unité de comparaison, qui compare la position de la main (12), au moment du dépassement du seuil de hauteur supérieur, à la position du centre de gravité (11) de l'utilisateur (1) par rapport à une direction de coordonnées s'étendant à la verticale par rapport au plan de la roue de la fortune (3) et à l'horizontale et, en fonction de cette comparaison, détermine si une rotation de la roue de la fortune (3) est effectuée dans le sens des aiguilles d'une montre ou dans le sens inverse.

**12.** Installation selon une des revendications 8 à 11, **caractérisée en ce que** l'unité d'affichage représente la roue de la fortune (3) pendant la première phase et/ou pendant la phase de rotation libre par son angle de rotation respectif ($\alpha$) sur un écran (6) et cette représentation est actualisée à intervalles prédéfinis, de sorte qu'un mouvement de rotation de la roue de la fortune (3) soit perçu sur l'écran (6).

**13.** Installation selon une des revendications 8 à 12, **caractérisée en ce que** la caméra (2) est une caméra en 3D ou une caméra de détection de profondeur basée sur l'infrarouge, à l'aide de laquelle, pour un certain nombre de pixels, une information de distance respective par rapport à la caméra (2) peut être déterminée.

**14.** Installation selon une des revendications 8 à 13, **caractérisée en ce qu'**une unité de sélection est prévue, qui sélectionne exclusivement l'utilisateur (1) qui est situé le plus proche de la caméra (2) parmi les utilisateurs respectifs (1) qui se trouvent dans la zone de prise de vues de la caméra (2), pour la détermination du mouvement de rotation de la roue de la fortune (3).

Fig. 1

Fig. 2

Fig. 3

Fig. 4

Fig. 5

Fig. 6

Fig. 7

Fig. 8

Fig. 9

Fig. 12

Fig. 11

Fig. 13

Fig. 10

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004166937 A1
- US 20110289456 A
- WO 2011013079 A
- WO 2007043036 A
- WO 2007105205 A
- WO 2008120217 A